# EUROPÄISCHE PATENTSCHRIFT

(11) **EP 1 530 131 B1**
(45) Veröffentlichungstag und Bekanntmachung des Hinweises auf die Patenterteilung: **23.12.2009**
(21) Anmeldenummer: 04025021.9
(22) Anmeldetag: 21.10.2004
(51) Int. Cl.: G06F 12/02

(54) **Beschleunigtes Referenzfinden für eine automatische Speicherbereinigung (Garbage Collection)**
Accelerated reference finding for an automatic garbage collection
Détermination accélérée de références pour un ramasse-miettes

(30) Priorität: 05.11.2003 DE 10351622
(43) Veröffentlichungstag der Anmeldung: 11.05.2005
(73) Patentinhaber: Giesecke & Devrient GmbH, 81677 München (DE)
(72) Erfinder: Kramposthuber, Georg, 80802 München (DE)
(74) Vertreter: Metzler, Volker

(56) Entgegenhaltungen:
- EP-A- 0 874 309
- WO-A-00/41079
- "Java Card 2.2 Virtual Machine Specification, Pages 39-44" 1. Juni 2002 (2002-06-01), SUN MICROSYSTEMS INC. , PALO ALTO, CA-USA , XP002459129 Gefunden im Internet: URL:http://java.sun.com/products/javacard/ specs.html> [gefunden am 2007-11-19] * Seite 40, Absatz 4 - Absatz 7 *

## Beschreibung

Die Erfindung betrifft eine Speichereinrichtung, in der Referenzen auf Objekte einer objektorientierten, klassenbasierten Programmiersprache abspeicherbar sind, ein Verfahren zum Durchsuchen einer solchen Speichereinrichtung nach Referenzen, sowie ein Verfahren zur Speicherbereinigung (Garbage Collection) zum Freigeben von dynamisch zugewiesenem (allokiertem, reserviertem) Speicher unter Verwendung des Verfahrens zum Durchsuchen des Speichers nach Referenzen.

Programmiersprachen lassen sich grundsätzlich funktional-logische Programmiersprachen und objektorientierte Programmiersprachen einteilen.

Bei funktional-logische Programmiersprachen liegt der Programmcode in Form von logisch aufeinander folgenden Befehlsfolgen vor. Beispiele für funktional-logische Programmiersprachen sind C, Pascal und Fortran.

Bei objektorientierten Programmiersprachen liegt der Programmcode in Form von Objekten vor, die in hierarchisch strukturierten Klassen angeordnet sind. Die hierarchische Struktur entsteht durch die Vererbung, die besagt, dass jede Klasse alle ihre Eigenschaften auf jede ihr untergeordnete Klasse vererbt. Beispiele für objektorientierte Programmiersprachen sind C++, Java, Smalltalk, Eiffel, Oberon, Perl, Python, Visual Basic und weitere. Die objektorientierten Programmiersprachen lassen sich weiter in rein objektorientierte Programmiersprachen und hybride objektorientierte Programmiersprachen unterteilen, wobei diese Unterteilung im Zusammenhang mit der Erfindung nicht wesentlich ist. Bei einigen objektorientierten Programmiersprachen, z.B. bei Java, sind die Klassen zusätzlich in Paketen (packages) angeordnet, wobei jedes Paket ein oder mehrere Klassen enthält.

Jedes Computerprogramm weist sich einen Arbeitsspeicher zu, d.h. allokiert Arbeitsspeicher, in dem z.B. die Befehle des Programms (Computerprogramms) ausgeführt werden und Variablen abgelegt werden. Der Arbeitsspeicher lässt sich in einen statisch zugewiesenen Speicher und einen dynamisch zugewiesenen Heap-Speicher unterteilen. Der statisch zugewiesene Speicher wird vor dem Ablaufen des Programms zugewiesen, z.B. während des Compilierens oder Linkens des Programms, wohingegen der dynamisch zugewiesene Heap-Speicher während der Laufzeit des Programmes zugewiesen wird.

Nicht mehr benötigter Heap-Speicher muss wieder freigegeben (deallokiert) werden, damit für spätere Befehlsabläufe wieder Speicher zur Verfügung steht.

Zur Verwaltung und Bereinigung von dynamisch zugewiesenem Heap-Speicher ist bei verschiedenen Programmiersprachen, wie Pascal, C und C++, zum dynamischen Zuweisen von Heap-Speicher einen Zuweisungsbefehl (allocate Befehl) vorgesehen und zum Freigeben von dynamisch zugewiesenem Heap-Speicher ein komplementärer Freigabebefehl (deallocate Befehl) vorgesehen. Bei diesem Konzept der Speicherverwaltung ist der Programmierer dafür verantwortlich, dass nicht mehr benötigter Heap-Speicher wieder freigegeben wird. Vergisst der Programmierer, Speicher wieder freizugeben, besteht die Gefahr, dass ein Speicherüberlauf auftritt.

Eine Reihe von objektorientierten Programmiersprachen, beispielsweise Java, Smalltalk, Eiffel, Oberen, Perl, Python, Visual Basic und weitere, haben eine automatische Speicherbereinigung (Garbage Collection), bei der nicht mehr verwendeter dynamisch zugewiesener Heap-Speicher automatisch wieder freigegeben wird.

Als nicht mehr verwendet werden bei der automatischen Speicherbereinigung solche Objekte im Heap-Speicher eingestuft, auf die keine Referenz gerichtet ist, oder gleichbedeutend die nicht referenziert sind. Nicht referenzierte Objekte sind von der höchsten hierarchischen Ebene, d.h. von der Root-Ebene oder Wurzel-Ebene aus, nicht erreichbar und sind somit "Garbage" (Müll), der gelöscht werden kann. Jedes referenzierte Objekt ist dagegen von der höchsten hierarchischen Ebene aus, d.h. von der Root-Ebene oder Wurzel-Ebene aus, erreichbar.

Die einfachste Form der automatischen Speicherbereinigung ist die Reference Counting Garbage Collection oder der Reference Counting Collector, bei dem jedes Objekt einen Referenzzähler enthält. Der Zählerstand des Referenzzählers gibt an, wie viele Referenzen auf das Objekt gerichtet sind. Für jede erzeugte Referenz auf das Objekt wird der Zählerstand um eins hochgezählt, und für jede gelöschte Referenz auf das Objekt wird der Zählerstand um eins heruntergezählt. Objekte, deren Referenzzähler einen Zählerstand von Null hat, werden als Garbage eingestuft und gelöscht bzw. der von den Garbage-Objekten besetzte Speicherplatz wird dem frei verfügbaren Heap-Speicher zugewiesen.

Neben Reference Counting Collectors gibt es die Tracing Collectors, bei denen Referenzen von der Root-Klasse (Wurzelklasse) des Heap-Speichers aus verfolgt ("getracet") werden. Hier bildet der Mark-and-Sweep Collector den grundlegenden Algorithmus. Beim Mark-and-Sweep Collector wird zuerst, in der sogenannten Mark-Phase, der Heap-Speicher nach Referenzen durchsucht, wobei Objekte, auf die keine Referenzen gefunden wurden, identifiziert und markiert werden. Die Suche nach Referenzen beginnt dabei in der höchstrangigen Klasse (gleichbedeutend Root-Klasse) des Heap-Speichers und arbeitet sich von dort aus hierarchisch durch den gesamten Heap-Speicher durch. Die in der Mark-Phase markierten Objekte werden in der nachfolgenden Sweep-Phase gelöscht.

Bei zwei weiteren Formen von automatischer Speicherbereinigung (Garbage Collection), den Compacting Collectors und den Copying Collectors, wird der Heap-Speicher bei der Speicherbereinigung zusätzlich defragmentiert.

Sowohl Compacting Collectors als auch Copying Collectors beginnen, ebenso wie Tracing Collectors, mit einem Durchsuchen des Heap-Speichers nach Referenzen, nur dass hier nicht die nicht referenzierten "toten" Objekte gesucht werden, sondern die "lebenden" Objekte, auf die noch Referenzen gerichtet sind (referenzierte Objekte).

Bei Compacting Collectors werden die gefundenen referenzierten Objekte ("lebenden" Objekte) zu einem Ende des Heap-Speichers hin verschoben und dort kompaktiert. Dadurch entsteht am entgegengesetzten Ende des Heap-Speichers ein großer zusammenhängender Speicherbereich. Anschließend werden alle Referenzen auf verschobene Objekte aktualisiert.

Bei Copying Collectors werden alle gefundenen referenzierten ("lebenden") Objekte von ihrem bisherigen alten Speicherbereich in einen neuen Speicherbereich kopiert und dabei lückenlos aneinandergefügt. Dadurch ist der neue Speicherbereich zusammenhängend, also defragmentiert. Der alte Speicherbereich wird als frei verfügbarer Speicherbereich deklariert.

Eine verbreitete Form von Copying Collectors ist der Stop-and-Copy Collector. Bei diesem ist der Heap in zwei Teilbereiche unterteilt. Jeweils nur einer der beiden Teilbereiche wird zu einem bestimmten Zeitpunkt verwendet, der andere Teilbereich bleibt währenddessen unbenutzt. Ist der gerade verwendete Teilbereich voll, wird die gewöhnliche Programmabarbeitung vorübergehend unterbrochen und die Abarbeitung der Stop-and-Copy Garbage Collection gestartet, bzw. der zur Stop-and-Copy Garbage Collection gehörige Prozess oder Thread wird in den Vordergrund geholt, und der zur gewöhnlichen Programmabarbeitung gehörige Prozess oder Thread wird in den Hintergrund verschoben. Hierbei werden im verwendeten Speicherbereich die referenzierten ("lebenden") Objekte identifiziert und in den anderen, nicht verwendeten Teilbereich kopiert, wobei die Objekte zusammenhängend aneinander gefügt werden. Dadurch wird im nicht verwendeten Teilbereich ein zusammenhängender Speicherbereich geschaffen, der alle lebenden Objekte aus dem verwendeten Teilbereich enthält. Anschließend wird der ursprüngliche nicht verwendete Teilbereich als neuer verwendeter Teilbereich deklariert und die gewöhnliche Programmabarbeitung wieder aufgenommen bzw. der zugehörige Prozess oder Thread in den Vordergrund geholt.

Generative (generational) Garbage Collections berücksichtigen zusätzlich, dass typischerweise junge Objekte nicht mehr benötigt werden und damit zu löschen sind, wohingegen alte Objekte häufig langlebigen Prozessen zugeordnet sind und meistens nicht zu löschen sind.

Bei allen genannten Formen von automatischer Speicherbereinigung (Garbage Collection) mit Ausnahme der Reference Counting Garbage Collection muss der gesamte verwendete Heap-Speicher nach Referenzen durchsucht werden, um für ein Objekt feststellen zu können, ob eine Referenz darauf gerichtet ist oder nicht, d.h. ob das Objekt ein nicht referenziertes ("totes") Objekt oder ein referenziertes ("lebendes") Objekt ist. Dies ist äußerst zeitaufwendig. Speziell bei Systemen mit relativ geringen Systemressourcen wie zum Beispiel Chipkarten (Smartcards) ist durch den Zeitaufwand, den das Durchsuchen des Heap-Speichers nach Referenzen bei der automatischen Speicherbereinigung benötigt, die Leistungsfähigkeit des Systems stark beeinträchtigt. Aus diesem Grund ist das Konzept der automatischen Speicherbereinigung (Garbage Collection) bislang im Wesentlichen auf Systeme wie Personal-Computer-Systeme und Serversysteme beschränkt.

Für die Programmiersprache Java™ der Firma Sun Microsystems Inc. wurde, ebenfalls von Sun Microsystems Inc., mit der JavaCard™ Technologie eine abgeänderte Java Technologie geschaffen, die die Verwendung von Java™ auf Systemen mit beschränkten Systemressourcen wie beispielsweise Smart Cards (Chipkarten) ermöglicht. Die JavaCard™ Technologie ist z.B. in der aktuellen - und laufend aktualisierten - Version in den Dokumenten "JavaCard™ 2.2 Runtime Environment (JCRE) Specification" (Spezifikation für die Java Card Laufzeitumgebung), "JavaCard™ 2.2 Virtual Machine (VM) Specification" (Spezifikation für die JavaCard™ Virtuelle Maschine) und "JavaCard™ 2.2 Application Programming Interface (API)" (JavaCard™ Applikations-Programmierschnittstelle) (alle Dokumente derzeit verfügbar unter http://java.sun.com/products/javacard) dargelegt.

In der Java Card Virtual Machine (VM) Specification ist unter anderem das Java Card CAP-Dateiformat (CAP = converted applet) (CAP file format) spezifiziert, das bei Java Cards anstelle des Java CLASS-Dateiformats verwendet wird, in dem bei Java compilierter, durch die Java Virtuelle Maschine ausführbarer Java Bytecode vorliegt.

WO 00/41079 A2 beschreibt eine Speicheranordnung mit einem Speicherverwaltungssystem, das eine Garbage Collection ausführt. Die Speicheranordnung enthält in Klassen angeordnete Objekte. Eine Klasse enthält eine spezielle Methode, die anzeigt, ob die Klasse referenzierte Objekte enthält. Hierdurch kann eine Klasse ohne referenzierte Objekte gelöscht werden, obwohl zur der Instanz (class loader), durch welche die Klasse geladen worden ist, in anderen von der Instanz geladenen Klassen noch referenzierte Objekte existieren, welche anderweitig ein Löschen der Klasse verhindern würden.

EP 0 874 309 A2 beschreibt eine Speicheranordnung mit einem Speicherverwaltungssystem, das eine Garbage Collection ausführt, gemäß dem Oberbegriff von Anspruch 1. Die Speicheranordnung enthält einen Speicher, in dem Objekte hierarchisch in einer Mehrzahl von hierarchisch geordneten Klassen angeordnet sind, und eine Sucheinrichtung zum Durchsuchen des Speichers. Jedes Objekt hat einen Referenzen-Speicherbereich, in dem Referenzen auf andere Objekte eingerichtet und entfernt werden können. Durch eine eingerichtete Referenz ist das jeweilige andere Objekt referenziert, so dass es vom Speicherort der Referenz aus adressierbar ist. Jede Referenz r auf ein referenziertes Objekt weist eine Direktreferenz auf.

Aufgabe der Erfindung ist es, eine Speichereinrichtung und ein Verfahren zu schaffen, die ein beschleunigtes Durchsuchen der Speichereinrichtung nach Referenzen, insbesondere bei der automatischen Speicherbereinigung (Garbage Collection), ermöglichen.

Die Aufgabe wird gelöst durch eine Speichereinrichtung und ein Verfahren nach einem der unabhängigen Ansprüche. Vorteilhafte Ausgestaltungen der Erfindung sind in den abhängigen Ansprüchen angeführt.

Die erfindungsgemäße Speichereinrichtung gemäß dem unabhängigen Anspruch 1 weist einen Speicher auf, in dem Objekte hierarchisch, in einer Mehrzahl von hierarchisch geordneten Klassen abgespeichert sind, wobei jedes Objekt so eingerichtet ist, dass darin Referenzen auf andere Objekte in der gleichen oder in einer darunterliegenden Klasse eingerichtet und entfernt werden können, wobei durch eine eingerichtete Referenz das jeweilige andere Objekt referenziert ist, so dass es vom Speicherort der Referenz aus adressierbar ist. Die Objekte sind dabei vorzugsweise Programmcode-Einheiten einer objektorientierten Programmiersprachen wie beispielsweise Java, Smalltalk, Eiffel, Oberon, Perl, Python, Visual Basic etc., vorzugsweise Java. Gemäß der Erfindung weist jede Referenz auf ein referenziertes Objekt zwei gesonderte Sub-Referenzen auf, nämlich eine Direktreferenz, durch die das referenzierte Objekt direkt referenziert ist, und, für die Klasse, in der sich das referenzierte Objekt befindet, und für jede übergeordnete Klasse bis zur Klasse direkt unter der Klasse, in der die Referenz enthalten ist, eine Klassenreferenz, durch die die jeweilige Klasse referenziert ist. Die Klassenreferenzen für ein Objekt haben, mit anderen Worten, die gleiche hierarchische Struktur wie die Klassen selbst. Die Speichereinrichtung weist weiter eine Sucheinrichtung zum Durchsuchen des Speichers nach Referenzen auf, die dazu eingerichtet ist, den Speicher hierarchisch musterförmig zu durchsuchen. Die Sucheinrichtung ist so eingerichtet, dass sie mit dem Durchsuchen in den höchstrangigen Klassen beginnt und zu den niedrigstrangigen Klassen absteigt. Dabei sucht sie zuerst in der jeweiligen Klasse nach Klassenreferenzen auf die nächst-höchstrangigen Klassen und zeichnet dabei nächst-höchstrangige Klassen, auf die eine Klassenreferenz gerichtet ist, als interessant für die weitere Suche aus. Anschließend sucht die Sucheinrichtung nur in solchen nächst-höchstrangigen Klassen, für die eine Klassenreferenz gefunden wurde, nach Referenzen (die wiederum Direkt- und Klassenreferenzen haben). Falls die Sucheinrichtung hingegen, beim Suchen in einer Klasse, für eine bestimmte nächst-höchstrangige Klasse keine Klassenreferenz gefunden hat, die auf die bestimmte nächst-höchstrangige Klasse gerichtet ist, bedeutet dies, dass in dieser bestimmten nächst-höchstrangigen Klasse und in sämtlichen der nächst-höchstrangigen Klasse untergeordneten niedrigerrangigen Klassen keine Referenzen, insbesondere keine Klassenreferenzen, enthalten sind. Die gesamte bestimmte nächst-höchstrangige Klasse und alle ihr untergeordneten Klassen sind also nicht erreichbar und damit Garbage. Folglich braucht in der bestimmten nicht-referenzierten nächst-höchstrangigen Klasse und in sämtlichen ihr untergeordneten niedrigerrangigen Klassen nicht weiter nach Referenzen gesucht zu werden. Mit anderen Worten werden Suchvorgänge, für die keine Referenzen mehr gefunden werden können, an einem Punkt in der hierarchischen Struktur im Heap-Speicher vorzeitig abgebrochen, an dem feststeht, dass im weiteren hierarchischen Verlauf des Suchvorgangs keine Referenz mehr existiert. Hierdurch ist die Zeit, die zum Durchsuchen des Speichers nach Referenzen erforderlich ist, und um nicht-referenzierte und/ oder referenzierte Objekte ausfindig zu machen, erheblich verringert.

Daher ist gemäß Anspruch 1 eine Speichereinrichtung geschaffen, die ein beschleunigtes Durchsuchen der Speichereinrichtung nach Referenzen ermöglicht.

Gemäß einer Ausführungsform der Erfindung sind die Objekte und/oder Klassen in Pakete eingeteilt. Die Pakete stellen eine spezielle Hierarchieebene dar. Bei dieser Ausführungsform weist jede Referenz eine Paketreferenz auf, durch die dasjenige Paket referenziert ist, in dem sich das referenzierte Objekt befindet. Die Paketreferenz kommt formal gesehen einem Spezialfall einer Klassenreferenz gleich. Beim Durchsuchen mittels der Sucheinrichtung wird zuerst nach Paketreferenzen gesucht. Anschließend wird nur in solchen Paketen nach Referenzen gesucht wird, für die eine Paketreferenz gefunden wurde. Pakete, auf die keine Paketreferenz gerichtet ist, enthalten auch innerhalb des Pakets keine weiteren Referenzen, weshalb der gesamte Inhalt des Pakets nicht referenziert und folglich nicht erreichbar ist. Das gesamte Paket kann gelöscht werden, ohne dass es vorher durchsucht werden muss.

Bei dem erfindungsgemäßen Verfahren zum Durchsuchen eines Speichers nach Referenzen gemäß Anspruch 10 wird nach Klassenreferenzen gesucht und, falls die Klassen in Paketen angeordnet sind, nach Paketreferenzen gesucht. Klassen und ggf. Pakete, auf die keine Klassenreferenz bzw. Paketreferenz gerichtet ist, werden nicht weiter durchsucht. Daher ist gemäß Anspruch 10 ein Verfahren geschaffen, das ein beschleunigtes Durchsuchen einer Speichereinrichtung nach Referenzen ermöglicht.

Die Verwendung des Verfahrens bei der Speicherbereinigung gemäß Anspruch 11 ermöglicht eine beschleunigte automatische Speicherbereinigung (Garbage Collection), da das Durchsuchen des Speichers nach Referenzen, das einen Großteil der Zeit bei der automatischen Speicherbereinigung einnimmt, beschleunigt ist.

Vorzugsweise haben alle einer vorbestimmten Klasse bzw. einem vorbestimmten Paket hierarchisch untergeordneten Objekte und/ oder Klassen bzw. Objekte und/oder Klassen und oder Pakete eine einzige gemeinsame Klassenreferenz bzw. Paketreferenz. Hierdurch ist die Suche nach Klassenreferenzen bzw. Paketreferenzen weiter vereinfacht.

Weiter weist die Klassenreferenz, ggf. insbesondere die Paketreferenz, einen Zähler auf, der für jedes Objekt, das untergeordnet zu der Klasse bzw. dem Paket erzeugt wird, hochgezählt wird, und der für jedes Objekt, das untergeordnet zu der Klasse bzw. dem Paket entfernt wird, heruntergezählt wird. Der Zähler hat immer dann einen Zählerstand von Null, wenn keine Referenz auf ein Objekt gerichtet ist, das der Klasse bzw. dem Paket hierarchisch untergeordnet ist. Folglich kann bei einem Zählerstand des Zählers von Null die gesamte Klasse bzw. das gesamte Paket gelöscht werden, ohne dass es vorher durchsucht zu werden braucht.

Die Klassenreferenz für eine vorbestimmte Klasse ist gemäß einer Variante in einem Formaldatenbereich, insbesondere im Header, der vorbestimmten Klasse eingetragen. Der Header enthält Formaldaten, die die Klasse betreffen. Die Klassenreferenz im Header ist so eingerichtet, dass für jedes Objekt, das in der vorbestimmten Klasse oder in einer der vorbestimmten Klasse untergeordneten Klasse eingerichtet wird, ein Eintrag im Header der Klasse vorgenommen wird. Vorzugsweise ist die Klassenreferenz im Header der Klasse als Zähler, nämlich der Klassenreferenz-Zähler, ausgebildet, der um eins hochgezählt wird, sobald eine Referenz auf ein der Klasse untergeordnetes Objekt eingerichtet wird, und der heruntergezählt wird, sobald eine Referenz auf ein der Klasse untergeordnetes Objekt entfernt wird. Hierdurch müssen beim Durchsuchen den Speichers nach Referenzen in einer ersten Stufe der Suche nur die Header der höchsten Klassen überprüft werden. Die Suche nach Referenzen wird nur in solchen Klassen fortgesetzt, in deren Header ein Eintrag gefunden wurde, der anzeigt, dass in der Klasse Referenzen enthalten sind. Insbesondere bei einem Klassenreferenz-Zähler wird die Klasse nur dann durchsucht, wenn der Wert des Klassenreferenz-Zählers von Null unterschiedlich ist.

Gemäß einer weiteren Variante der Erfindung weist die Klassenreferenz ein charakteristisches Merkmal oder Muster auf, das z.B. in einer vorbestimmten reservierten Bitfolge bestehen kann. Durch das Merkmal oder Muster ist eindeutig erkennbar, dass eine Klassenreferenz vorliegt. Bei dieser Variante ist die Sucheinrichtung zum Suchen nach dem Merkmal bzw. Muster eingerichtet. Die Sucheinrichtung sucht nach dem Merkmal bzw. Muster. Wird ein Muster gefunden, so ist identifiziert, dass es eine Klassenreferenz gibt. Auf welche Klasse die Klassenreferenz gerichtet ist, geht aus einem Klassenidentifikator hervor, der zusätzlich zu dem Merkmal oder Muster in der Klassenreferenz enthalten ist. Durch den Klassenidentifikator ist die Klasse gegenüber anderen Klassen eindeutig identifiziert. Die Klassenreferenz mit dem Merkmal bzw. Muster kann wahlweise mit einem Zähler kombiniert sein, wie der oben zu der Klassenreferenz beschrieben ist, die im Header der Klasse vorgesehen ist.

Die Paketreferenz ist gemäß einer Variante in einem Formaldatenbereich, insbesondere im Header, des Pakets eingerichtet, auf das sie sich bezieht. Die Paketreferenz im Header ist so eingerichtet, .dass für jedes Objekt, das in dem vorbestimmten Pakte oder in einer dem vorbestimmten Paket untergeordneten Klasse eingerichtet wird, ein Eintrag im Header des Pakets vorgenommen wird. Vorzugsweise ist die Paketreferenz im Header des Pakets als Zähler, nämlich der Paketreferenz-Zähler, ausgebildet, der um eins hochgezählt wird, sobald eine Referenz auf ein dem Paket untergeordnetes Objekt eingerichtet wird, und der heruntergezählt wird, sobald eine Referenz auf ein dem Paket untergeordnetes Objekt entfernt wird. Hierdurch müssen beim Durchsuchen den Speichers nach Referenzen in einer ersten Stufe der Suche nur die Header der Pakete überprüft werden. Die Suche nach Referenzen wird nur in solchen Paketen fortgesetzt, in deren Header ein Eintrag gefunden wurde, der anzeigt, dass in dem Paket Referenzen enthalten sind. Insbesondere bei einem Paketreferenz-Zähler wird das Paket nur dann durchsucht, wenn der Wert des Paketreferenz-Zählers von Null unterschiedlich ist.

Gemäß einer weiteren Variante der Erfindung weist die Paketreferenz ein charakteristisches Merkmal oder Muster auf, das z.B. in einer vorbestimmten reservierten Bitfolge bestehen kann. Durch das Merkmal oder Muster ist eindeutig erkennbar, dass eine Paketreferenz vorliegt. Bei dieser Variante ist die Sucheinrichtung zum Suchen nach dem Merkmal bzw. Muster eingerichtet. Die Sucheinrichtung sucht nach dem Merkmal bzw. Muster. Wird ein Muster gefunden, so ist identifiziert, dass es eine Paketreferenz gibt. Auf welches Paket die Paketreferenz gerichtet ist, geht aus einem Paketindex hervor, der zusätzlich zu dem Merkmal oder Muster in der Paketreferenz enthalten ist. Durch den Paketindex ist das Paket gegenüber anderen Paketen eindeutig identifiziert. Die Paketreferenz mit dem Merkmal bzw. Muster kann wahlweise mit einem Zähler kombiniert sein, wie der oben zu der Paketreferenz beschrieben ist, die im Header des Pakets vorgesehen ist.

Die Speichereinrichtung weist vorzugsweise weiter Mittel zum Durchführen weiterer Schritte von automatischer Speicherbereinigung (Garbage Collection) auf, wobei die Garbage Collection wahlweise ein Tracing Collector, insbesondere Mark-and-Sweep Collector, Compacting Collector oder Copying Collector Garbage Collection ist.

Als Mittel zum Durchführen weiterer Schritte von automatischer Speicherbereinigung weist die Speichereinrichtung vorzugsweise weiter eine Löscheinrichtung auf, die dazu eingerichtet ist, Klassen und Objekte, für die durch die Sucheinrichtung keine Referenz gefunden wurde, zu löschen.

Falls die Objekte und Klassen zusätzlich zu Paketen angeordnet sind, ist vorzugsweise die Löscheinrichtung zusätzlich zum Löschen von ganzen Paketen eingerichtet.

Bei der erfindungsgemäßen Speicherbereinigung wird in einer jeweiligen Klasse nach Klassenreferenzen auf die nächst-höchstrangigen Klassen gesucht und nur in solchen nächst-höchstrangigen Klassen nach Referenzen (die wiederum Direkt- und Klassenreferenzen haben) gesucht, für die eine Klassenreferenz gefunden wurde. Falls Pakete existieren, wird nach Paketreferenzen gesucht. Pakete und Klassen, auf die keine Referenz gefunden wurde, werden gelöscht, ohne dass sie vorher durchsucht werden. Der von den Paketen bzw. Klassen belegte Speicherplatz wird dem frei verfügbaren Speicher zugeschlagen.

Wahlweise wird bei der Speicherbereinigung zuerst der gesamte Speicher durchsucht, und anschließend werden nicht referenzierte Pakete, Klassen und Objekte gelöscht. Alternativ werden detektierte nicht referenzierte Pakete und/ oder Klassen und/ oder Objekte unverzüglich gelöscht, und erst anschließend wird die Suche nach weiteren nicht referenzierten Paketen und/ oder Klassen und/ oder Objekten fortgesetzt, bis wiederum ein nicht referenziertes Paket und/ oder Klasse und/ oder Objekt gefunden wird, das ebenfalls unverzüglich gelöscht wird. Alternativ werden detektierte nicht referenzierte Pakete und/ oder Klassen und/ oder Objekte unverzüglich gelöscht, wenn ein vorbestimmter Teilbereich der hierarchischen Struktur des Speichers durchsucht ist, oder wenn eine vorbestimmte Ebene in der Hierarchie des Speichers erreicht ist.

Die Speichereinrichtung, das Verfahren zum Durchsuchen der Speichereinrichtung und die automatische Speicherbereinigung mit dem Verfahren werden vorzugsweise bei einer Chipkarte verwendet. Bei einer Chipkarte, die eine vergleichsweise geringe Rechenleistung hat, ist die Beschleunigung des Durchsuchens des Speichers und die daraus resultierende Beschleunigung der Speicherbereinigung besonders vorteilhaft.

Unter einer Chipkarte im Sinne der Erfindung wird jede Art von einem Kartenkörper mit einem darin integrierten elektronischen Schaltkreis verstanden. Der Kartenkörper der Chipkarte kann in beliebiger geeigneter Form gestaltet sein, insbesondere flach, insbesondere nach ISO 7810 (z.B. ID-1, ID-00, ID-000), oder in Form eines volumigen Körpers, z.B. eines Tokens. Im Sinn der Erfindung ist die Chipkarte vorzugsweise eine Smart Card mit einem Mikroprozessor und weiter vorzugsweise eine Java Card. Der Mikroprozessor ist vorzugsweise in einem Chipmodul integriert, das in den Kartenkörper integriert ist. Die Chipkarte kann weiter eine kontaktlose Chipkarte mit Mitteln zur kontaktlosen Kontaktierung (z.B. Antenne, Spule), eine kontaktbehaftete Chipkarte mit Mitteln zur kontaktbehafteten Kontaktierung (z.B. galvanischen Kontaktflächen, Schnittstelle wie USB etc.), oder eine Kombinationskarte (Kombikarte, Dual-Interface-Karte) mit sowohl Mitteln zur kontaktlosen Kontaktierung als auch kontaktbehafteten Kontaktierung sein.

Im folgenden wird die Erfindung anhand von Ausführungsbeispielen und unter Bezugnahme auf die Zeichnung näher erläutert, in der zeigen:
- Fig. 1: den schematischen Aufbau des Speicherinhalts eines Heap-Speichers, in dem sechs hierarchisch angeordnete Klassen Class 0 bis Class 5 angeordnet sind;
- Fig. 2: eine Referenz r=pd=15, die zusammengesetzt ist aus einer auf ein Objekt o5 gerichteten Direktreferenz d=5 und einer auf ein Paket p1 gerichteten Paketreferenz p=1.

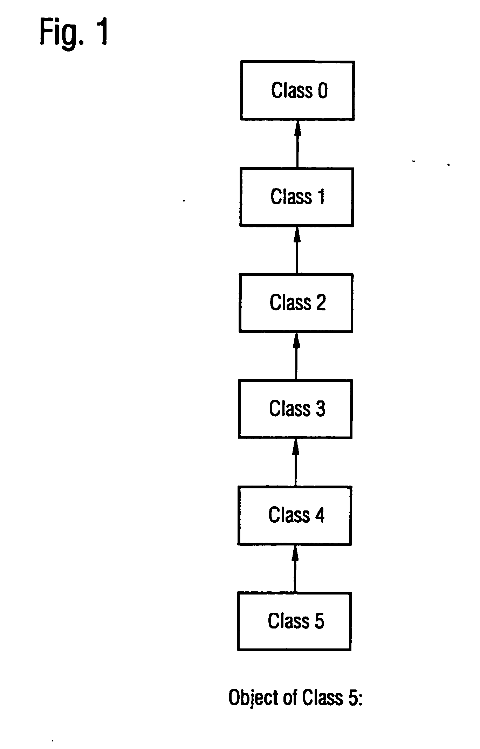

Fig. 1 zeigt den schematischen Aufbau des Speicherinhalts eines Heap-Speichers, in dem sechs hierarchisch angeordnete Klassen Class 0 bis Class 5 angeordnet sind. Class 0 ist eine Klasse, in der ein Objekt angeordnet ist, auf das eine Referenz gerichtet ist. Class 5 ist die Root-Klasse, d.h. die höchste Superklasse zu dem Objekt. Die Referenz auf das Objekt erstreckt sich von der Root-Klasse Class 5 durch die hierarchische Struktur der Klassen hindurch, bis zum Objekt in der Klasse Class 0, wie durch Pfeile angedeutet ist.

Zu dem in Fig. 1 dargestellten Speicherinhalt wird Bezug genommen auf den Header class_info gemäß der Java Card 2.2 Virtual Machine Specification (Spezifikation der Virtuellen Maschine für Java Card 2.2). Der Speicherinhalt genügt dem CAP-Dateiformat (CAP file format, wobei CAP = converted applet) gemäß Kapitel 6 der genannten Java Card 2.2 Virtual Machine Specification. Jede Klasse weist einen Header class_info auf, der zu der jeweiligen Klasse formale Informationen enthält, wie z.B. den Wert des Referenzzählers referece_count und, zu jeder Instanz der Klasse, d.h. zu jedem in der Klasse enthaltenen Objekt, die Größe declared_instance_size der jeweiligen Instanz (d.h. des jeweiligen Objekts).

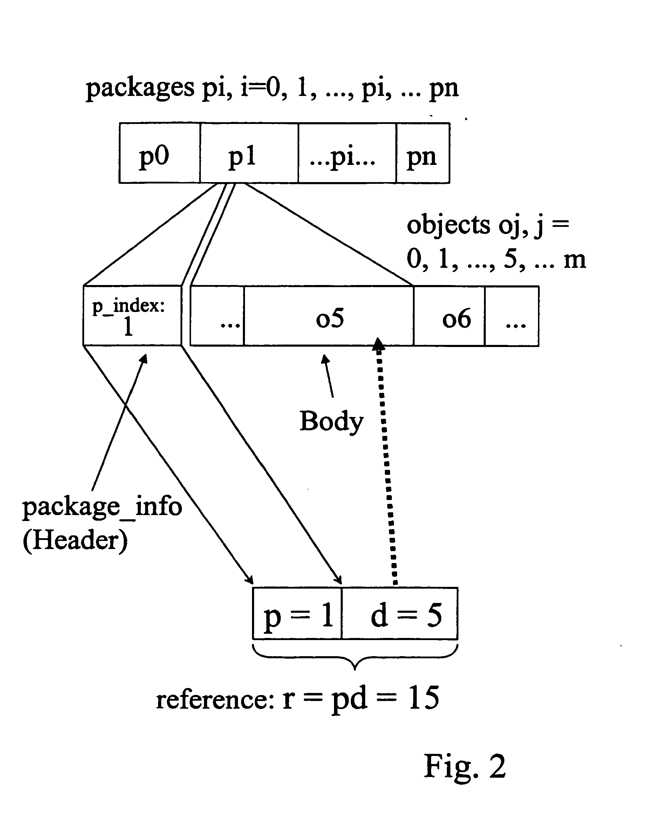

Gemäß einer Ausführungsform der Erfindung, die unter Bezugnahme auf Fig. 2 erklärt wird, ist eine Chipkarte vorgesehen, die als Java Card gestaltet ist. Die Java Card weist eine Speichereinrichtung mit einem Heap-Speicher als Speicher im Sinn der Erfindung auf. Im Heap-Speicher werden zur Laufzeit Objekte dynamisch allokiert (zugewiesen). Die Java Card verfügt über eine automatische Speicherbereinigung gemäß der Erfindung. Gemäß der Ausführungsform sind die Objekte in Klassen eingeteilt und die Klassen in Pakete pi, i=0..n eingeteilt. Jedes Paket pi hat einen Header package_info, der in Fig. 2 nur für das Paket p1 dargestellt ist. Im Header package_info ist ein Paketindex i abgespeichert, durch den ein vorbestimmtes Paket pi eindeutig gekennzeichnet ist und von anderen Paketen unterscheidbar ist. Dieser Paketindex i wird für die Paketreferenz p innerhalb einer Referenz r verwendet. Eine Referenz r, die von außerhalb eines Pakets pi auf ein Objekt oj innerhalb des Pakets gerichtet ist, in Fig. 2 beispielsweise auf das Objekt o5, enthält eine Stelle, die für die Paketreferenz reserviert ist. Abstrakt hat die Referenz r die Form r = pd, wobei p die Paketreferenz darstellt und d die Direktreferenz darstellt. Für das vorbestimmte Paket pi hat die Stelle für die Paketreferenz den Wert i. Für eine vorbestimmtes Objekt oj im Paket pi hat d den Wert j. Die Referenz hat also in diesem Fall die Form r = pd und den Wert r = pd = ij, wobei i für die Paketreferenz des Pakets pi steht und j für die Direktreferenz des Objekts oj steht, also r = pd = 15 für Fig. 3. Optional statt des Paketindex i eine andere Information für die Paketreferenz p des Pakets pi verwendet, z.B. ein Muster, z.B. eine vorbestimmte charakteristische Bitfolge.

Für eine Datenstruktur, die eine Mehrzahl von hierarchischen Klassen c0, c1, ... cm aufweist, die entsprechend angeordnet sind wie die in Fig. 1 schematisch dargestellten Klassen, wobei cm die Klassenebene direkt unter der Root-Ebene ist, hat eine Referenz auf ein Objekt in der niedrigsten Klasse c0 die allgemeine Form r = cmcm-1cm-2...c1c0d. Falls zusätzlich als den Klassen übergeordnete hierarchische Ebene Pakete vorgesehen sind, hat die Referenz r die allgemeine Form r = pcmcm-1cm-2...c1c0d. Eine Referenz r(k) auf ein Objekt in einer Klasse ck, k = [0...m], hat die Form r = cmcm-1cm-2...ckd bzw. r = pcmcm-1cm-2...ckd. Beim Durchsuchen des Heap-Speichers nach Referenzen wird zuerst von der Root-Ebene aus nach Paketreferenzen gesucht. Dabei werden beispielsweise, bei sechs Paketen p0...p5, für die Pakete p0, p3 und p4 Paketreferenzen gefunden. Für die übrigen Pakete p1, p2 und p5 werden keine Paketreferenzen gefunden. Folglich wird nur in den Paketen p0, p3 und p4 weiter nach Referenzen gesucht. Die Pakete p1, p2 und p5 werden ohne Weiteres gelöscht.

## Patentansprüche

1. Speicheranordnung, für einen Datenträger,
- mit einem Speicher, in dem Objekte hierarchisch, in einer Mehrzahl von hierarchisch geordneten Klassen abgespeichert sind, wobei jedes Objekt so eingerichtet ist, dass darin Referenzen (r) auf andere Objekte in der gleichen oder in einer darunterliegenden Klasse eingerichtet und entfernt werden können, wobei durch eine eingerichtete Referenz (r) das jeweilige andere Objekt referenziert ist, so dass es vom Speicherort der Referenz (r) aus adressierbar ist,
- wobei jede Referenz (r) auf ein referenziertes Objekt aufweist:
- eine Direktreferenz (d), durch die das referenzierte Objekt direkt referenziert ist, und,
- mit einer Sucheinrichtung zum Durchsuchen des Speichers nach Referenzen,
**dadurch gekennzeichnet, dass**
- jede Referenz (r) auf ein referenziertes Objekt weiter aufweist:
- für die Klasse, in der sich das referenzierte Objekt befindet, und für jede übergeordnete Klasse bis zur Klasse direkt unter der Klasse, in der die Referenz enthalten ist, eine Klassenreferenz (p), durch die die jeweilige Klasse referenziert ist,
- und die Sucheinrichtung dazu eingerichtet ist, beginnend mit den höchstrangigen Klassen und absteigend zu den niedrigstrangigen Klassen,
- in der jeweiligen Klasse nach Klassenreferenzen (p) auf die nächst-höchstrangigen Klassen zu suchen, und
- nur in solchen nächst-höchstrangigen Klassen nach Referenzen (r = pd) zu suchen, für die eine Klassenreferenz (p) gefunden wurde.

2. Speichereinrichtung nach Anspruch 1, wobei die Objekte und/oder Klassen in Pakete eingeteilt sind, wobei
- jede Referenz (r) als eine spezielle Klassenreferenz eine Paketreferenz (p) aufweist, durch die das Paket referenziert ist, in dem sich das referenzierte Objekt befindet, und
- wobei beim Durchsuchen des Speichers nach Referenzen
- nach Paketreferenzen (p) gesucht wird und
- nur in solchen Paketen weiter nach Referenzen (r) gesucht wird, für die eine Paketreferenz (p) gefunden wurde.

3. Speichereinrichtung nach Anspruch 1 oder 2, die weiter aufweist:
eine Löscheinrichtung, die dazu eingerichtet ist, Klassen und/ oder Objekte und/oder ggf. Pakete, für die durch die Sucheinrichtung keine auf die Klasse bzw. das Objekt bzw. das Paket gerichtete Referenz (r) gefunden wurde, zu löschen.

4. Speichereinrichtung nach einem der Ansprüche 1 bis 3, wobei die Objekte in einer objektorientierten Programmiersprache, insbesondere Java, vorliegen.

5. Speichereinrichtung nach einem der Ansprüche 1 bis 4, wobei der Speicher ein dynamisch zugewiesener Speicher ist, insbesondere ein Heap-Speicher.

6. Speichereinrichtung nach einem der Ansprüche 1 bis 5, wobei der Speicher in eine Mehrzahl von Teilspeichern unterteilt ist, wobei jeder Klasse und/ oder jedem Paket ein gesonderter Teilspeicher zugeordnet ist, der im wesentlichen nur der Klasse bzw. dem Paket und der Klasse bzw. dem Paket untergeordneten Klassen und/ oder Objekten zur Verfügung steht.

7. Speichereinrichtung nach einem der Ansprüche 1 bis 6, wobei alle einer vorbestimmten Klasse bzw. einem vorbestimmten Paket hierarchisch untergeordneten Objekte und/ oder Klassen bzw. Objekte und/oder Klassen und/ oder Pakete eine einzige gemeinsame Klassenreferenz bzw. Paketreferenz (p) haben.

8. Speichereinrichtung nach einem der Ansprüche 1 bis 7, wobei die Klassenreferenz, ggf. insbesondere die Paketreferenz (p), ein charakteristisches Merkmal oder Muster aufweist, durch das eindeutig erkennbar ist, dass eine Klassenreferenz, bzw. ggf. Paketreferenz (p), vorliegt, und wobei die Sucheinrichtung zum Suchen nach dem Merkmal bzw. Muster eingerichtet ist.

9. Speichereinrichtung nach einem der Ansprüche 1 bis 8, wobei die Klassenreferenz bzw. Paketreferenz (p) in einem Formaldatenbereich, insbesondere Header (package_info, Header), der Klasse bzw. des Pakets vorgesehen ist.

10. Speichereinrichtung nach einem der Ansprüche 1 bis 9, wobei die Klassenreferenz, ggf. insbesondere die Paketreferenz (p), einen Zähler aufweist, der für jedes Objekt, das untergeordnet zu der Klasse bzw. dem Paket erzeugt wird, hochgezählt wird, und der für jedes Objekt, das untergeordnet zu der Klasse bzw. dem Paket entfernt wird, heruntergezählt wird.

11. Verwendung eines Speichers nach einem der Ansprüche 1 bis 10 in einem Verfahren zum Durchsuchen des Speichers,
**dadurch gekennzeichnet, dass**
- in der jeweiligen Klasse und/ oder Paket nach Klassenreferenzen bzw. Paketreferenzen auf die nächst-höchstrangigen Klassen gesucht wird, und
- nur in solchen nächst-höchstrangigen Klassen bzw. Paketen nach Referenzen, die wiederum Direkt- und Klassenreferenzen haben, gesucht wird, für die eine Klassenreferenz bzw. Paketreferenz gefunden wurde.

12. Verwendung nach Anspruch 11, bei der Speicherbereinigung, wobei
- der Speicher durchsucht wird, und
- der Speicher bereinigt wird, indem nicht referenzierte Objekte und Klassen und ggf. Pakete gelöscht werden oder Speicherbereiche, in denen nicht referenzierte Objekte oder Klassen oder ggf. Pakete abgespeichert sind, anderweitig als freie Speicherbereiche zur Verfügung gestellt werden.

13. Datenträger, insbesondere Chipkarte, mit einem elektronischen Schaltkreis und einer in dem Schaltkreis implementierten Speichereinrichtung nach einem der Ansprüche 1 bis 10.

## Claims

1. A memory assembly, for a data carrier,
- having a memory in which objects are stored hierarchically, in a plurality of hierarchically ordered classes, each object being so adapted that references (r) to other objects in the same class or in a subclass can be set up and removed therein, a set-up reference (r) causing the respective other object to be referenced so that it is addressable from the memory location of the reference (r),
- each reference (r) to a referenced object exhibiting:
- a direct reference (d) through which the referenced object is directly referenced, and,
- having a searching device for searching the memory for references,
**characterized in that**
- each reference (r) to a referenced object further exhibits:
- for the class in which the referenced object is located, and for each superclass up to the immediate subclass of the class in which the reference is contained, a class reference (p) through which the particular class is referenced,
- and the searching device is adapted, starting with the highest-ranking classes and descending to the lowest-ranking classes, to
- search in the particular class for class references (p) to the next-highest-ranking classes, and
- search for references (r = pd) only in those next-highest-ranking classes for which a class reference (p) was found.

2. The memory device according to claim 1, wherein the objects and/or classes are divided into packages, wherein
- each reference (r) has as a special class reference a package reference (p) through which the package in which the referenced object is located is referenced, and
- wherein upon the searching of the memory for references
- package references (p) are searched for and
- references (r) are further searched for only in those packages for which a package reference (p) was found.

3. The memory device according to claim 1 or 2, which further has:
a deleting device which is adapted to delete classes and/or objects and/or optionally packages for which no reference (r) directed to the class or object or package was found by the searching device.

4. The memory device according to any of claims 1 to 3, wherein the objects are present in an object-oriented programming language, in particular Java.

5. The memory device according to any of claims 1 to 4, wherein the memory is a dynamically allocated memory, in particular a heap memory.

6. The memory device according to any of claims 1 to 5, wherein the memory is subdivided into a plurality of partial memories, wherein each class and/or each package has a separate partial memory associated therewith which is available substantially only to the class or package and subclasses and/or subobjects of the class or package.

7. The memory device according to any of claims 1 to 6, wherein all hierarchical subobjects and/or subclasses of a predetermined class or predetermined package, or objects and/or classes and/or packages have a single common class reference or package reference (p).

8. The memory device according to any of claims 1 to 7, wherein the class reference, optionally in particular the package reference (p), has a characteristic feature or pattern which makes it unambiguously recognizable that a class reference, or optionally package reference (p), is present, and wherein the searching device is adapted for searching for the feature or pattern.

9. The memory device according to any of claims 1 to 8, wherein the class reference or package reference (p) is provided in a formal data area, in particular header (package_info, Header), of the class or package.

10. The memory device according to any of claims 1 to 9, wherein the class reference, optionally in particular the package reference (p), has a counter which is incremented for each generated subobject of the class or package, and which is decremented for each removed subobject of the class or package.

11. Use of a memory according to any of claims 1 to 10 in a method for searching the memory,
**characterized in that**
- in the particular class and/or package, class references or package references to the next-highest-ranking classes are searched for, and
- references in turn having direct and class references are searched for only in those next-highest-ranking classes or packages for which a class reference or package reference was found.

12. The use according to claim 11, upon garbage collection, wherein
- the memory is searched, and
- the memory is cleaned up by non-referenced objects and classes and optionally packages being deleted, or storage areas in which non-referenced objects or classes or optionally packages are stored being made available as free storage areas for other purposes.

13. A data carrier, in particular chip card, having an electronic circuit and a memory device according to any of claims 1 to 10 implemented in the circuit.

## Revendications

1. Disposition de mémoire, pour un support de données,
- avec une mémoire dans laquelle des objets sont mémorisés hiérarchiquement dans plusieurs classes ordonnées hiérarchiquement, chaque objet étant configuré de telle manière que des références (r) à d'autre objets peuvent y être configurées et enlevées dans la même classe ou dans une classe se trouvant en dessous, l'autre objet respectif étant référencé par une référence configurée (r), de sorte qu'il est adressable à partir du lieu de mémoire de la référence (r),
- chaque référence (r) à un objet référencié comportant:
- une référence (d) directe par laquelle l'objet référencié est référencié directement, et,
- avec un dispositif de recherche pour rechercher des références dans la mémoire,
**caractérisée en ce que**
- chaque référence (r) à un objet référencié comporte en outre :
- pour la classe dans laquelle l'objet référencié se trouve, et pour chaque classe de rang supérieur jusqu'à la classe se trouvant juste en dessous de la classe dans laquelle la référence est contenue, une référence de classe (p) par laquelle la classe respective est référenciée,
- et **en ce que** le dispositif de recherche est configuré pour, en commençant par les classes de plus haut rang et en descendant aux classes de plus bas rang,
- rechercher, dans la classe respective, des références de classe (p) relatives aux classes les plus proches parmi celles du rang le plus élevé, et
- rechercher des références (r = pd) uniquement dans de telles classes les plus proches parmi celles du rang le plus élevé pour lesquelles une référence de classe (p) a été trouvée.

2. Dispositif de mémoire selon la revendication 1, les objets et / ou les classes étant répartis en paquets,
- chaque référence (r) présentant, en tant qu'une référence de classe spéciale, une référence de paquet (p) par laquelle le paquet dans lequel se trouve l'objet référencié est référencié, et
- lors de la recherche de références dans la mémoire,
- des références de paquet (p) étant recherchées, et
- la recherche de références (r) n'étant poursuivie que dans les paquets pour lesquels une référence de paquet (p) a été trouvée.

3. Dispositif de mémoire selon la revendication 1 ou 2, comportant en outre :
un dispositif d'effaçage configuré pour effacer des classes et / ou des objets et / ou le cas échéant des paquets pour lesquels aucune référence (r) s'appliquant à la classe ou à l'objet ou au paquet n'a été trouvée par le dispositif de recherche.

4. Dispositif de mémoire selon une des revendications de 1 à 3, les objets étant disponibles en un langage de programmation orientée objet, notamment Java.

5. Dispositif de mémoire selon une des revendications de 1 à 4, la mémoire étant une mémoire affectée dynamiquement, notamment une mémoire heap.

6. Dispositif de mémoire selon une des revendications de 1 à 5, la mémoire étant subdivisée en plusieurs mémoires partielles, une mémoire partielle distincte, disponible pour l'essentiel uniquement pour la classe ou le paquet et pour des classes et / ou des objets subordonnés à la classe ou au paquet, étant affectée à chaque classe et / ou à chaque paquet.

7. Dispositif de mémoire selon une des revendications de 1 à 6, tous les objets et / ou les classes ou bien les objets et / ou les classes et / ou les paquets subordonnés hiérarchiquement à une classe prédéterminée ou à un paquet prédéterminé ayant une unique référence commune de classe ou de paquet (p).

8. Dispositif de mémoire selon une des revendications de 1 à 7, la référence de classe, le cas échéant notamment la référence de paquet (p), présentant un caractère ou un motif caractéristique par lequel il est reconnaissable sans équivoque que l'on a affaire à une référence de classe ou le cas échéant à une référence de paquet (p), et le dispositif de recherche étant configuré pour rechercher le caractère ou le motif.

9. Dispositif de mémoire selon une des revendications de 1 à 8, la référence de classe ou la référence de paquet (p) étant prévue dans une zone de données formelles, notamment Header (package_info, Header), de la classe ou du paquet.

10. Dispositif de mémoire selon une des revendications de 1 à 9, la référence de classe, le cas échéant notamment la référence de paquet (p), présentant un compteur qui est incrémenté pour chaque objet généré de manière subordonnée à la classe ou au paquet, et qui est décrémenté pour chaque objet enlevé de manière subordonnée à la classe ou au paquet.

11. Utilisation d'une mémoire selon une des revendications de 1 à 10 dans un processus de recherche parcourant la mémoire,
**caractérisée en ce que**
- il est recherché dans la classe et / ou le paquet respectif des références de classes ou références de paquets relatives aux classes les plus proches parmi celles du rang le plus élevé, et
- des références, qui ont quant à elles des références directes et de classe, ne sont recherchées qu'uniquement dans de telles classes ou paquets les plus proches parmi ceux du rang le plus élevé pour lesquels une référence de classe ou de paquet a été trouvée.

12. Utilisation selon la revendication 11, lors du garbage collection,
- la mémoire étant parcourue, et
- un garbage collection ayant lieu, des objets et classes et le cas échéant paquets non référenciés étant effacés ou des zones de mémoire dans lesquelles des objets ou classes ou le cas échéant paquets sont mémorisés étant mises à disposition par ailleurs en tant que zones de mémoires libres.

13. Support de données, notamment carte à puce, comportant un circuit électronique et un dispositif de mémoire implémenté dans le circuit selon une des revendications de 1 à 10.
